(19) Europäisches Patentamt
European Patent Office
Office européen des brevets

(11) EP 0 482 501 B1

(12) # EUROPÄISCHE PATENTSCHRIFT

(45) Veröffentlichungstag und Bekanntmachung des Hinweises auf die Patenterteilung:
**24.01.1996 Patentblatt 1996/04**

(51) Int. Cl.$^6$: **B32B 27/32**, B65D 65/40

(21) Anmeldenummer: **91117663.4**

(22) Anmeldetag: **16.10.1991**

(54) **Beidseitig siegelbare, biaxial orientierte Polyolfin-Mehrschichtfolie mit erhöhtem Schrumpf**
Two-sided sealable biaxially oriented polyolefin multilayer film with increased shrinkage
Feuille multicouche en polyoléfin orientée biaxialement scellable sur ses deux faces à rétraction élevée

(84) Benannte Vertragsstaaten:
**BE DE ES FR GB IT NL**

(30) Priorität: **26.10.1990 DE 4034134**

(43) Veröffentlichungstag der Anmeldung:
**29.04.1992 Patentblatt 1992/18**

(73) Patentinhaber: **HOECHST AKTIENGESELLSCHAFT**
**D-65926 Frankfurt am Main (DE)**

(72) Erfinder:
- **Murschall, Ursula, Dr.**
  **W-6505 Nierstein (DE)**
- **Peiffer, Herbert, Dr.**
  **W-6500 Mainz-Finthen (DE)**
- **Schlögl, Gunter, Dr.**
  **W-6233 Kelkheim (DE)**

(56) Entgegenhaltungen:

| | |
|---|---|
| **EP-A- 0 164 493** | **EP-A- 0 194 588** |
| **EP-A- 0 361 280** | **EP-A- 0 477 797** |
| **DE-A- 3 624 543** | **DE-A- 3 735 272** |
| **FR-A- 2 230 665** | **FR-A- 2 230 665** |
| **GB-A- 2 055 688** | **GB-A- 2 055 688** |
| **US-A- 4 230 767** | |

Bemerkungen:
Die Akte enthält technische Angaben, die nach dem Eingang der Anmeldung eingereicht wurden und die nicht in dieser Patentschrift enthalten sind.

EP 0 482 501 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.9.7/3.4

## Beschreibung

Die vorliegende Erfindung betrifft eine beidseitig siegelbare, transparente, coextrudierte Polyolefin-Mehrschichtfolie; deren Basisschicht im wesentlichen aus einem Polypropylenpolymeren und deren Deckschichten im wesentlichen aus siegelbaren Olefinpolymeren bestehen. Die Mehrschichtfolie zeichnet sich durch einen hohen Schrumpf in Längs- und Querrichtung in Kombination mit exzellenten optischen Eigenschaften und einer guten Maschinengängigkeit auf schnell laufenden Einschlagmaschinen aus. Weiterhin betrifft die Erfindung ein Verfahren zur Herstellung einer solchen Folie und deren Verwendung.

Beidseitig siegelbare, biaxial orientierte Polyolefinmehrschichtfolien, bei denen die Basisschicht aus Propylenhomopolymeren und die beiden Siegelschichten (Außenschichten oder Deckschichten) aus siegelbaren Olefinpolymeren bestehen, sind in zahlreichen Druckschriften beschrieben (z. B. EP 0 194 588, EP 0008 904, US Patentschrift 4419 411). Diese Polyolefinmehrschichtfolien besitzen die für Verpackungsfolien wichtigen Eigenschaften, nämlich einen großen Siegelbereich, eine gute Heißsiegelbarkeit, eine relativ hohe Kratzfestigkeit, eine geringe Reibung und damit gute Laufeigenschaften auf schnell laufenden Verpackungsmaschinen unterschiedlichen Typs.

Diese Folien lassen jedoch hinsichtlich der optischen Eigenschaften zu wünschen übrig.

Die beschriebenen Folien werden in der Regel so hergestellt, daß sie möglichst dimensionsstabil sind, d. h. diese Folien weisen einen möglichst niedrigen Schrumpf in Längs- und Querrichtung auf. Im allgemeinen zeigen derartige Verpackungsfolien bei 120 °C Schrumpfwerte von kleiner 4 % in Längsrichtung und kleiner 2 % in Querrichtung. Bisher war man der Meinung, daß Folien mit diesen niedrigen Schrumpfwerten ein optisch gutes Einschlagbild liefern. Tatsächlich aber sind die Packungen lose oder blusig eingeschlagen und zeigen an den Kanten Falten und Wellen.

EP-A-0 477 797 offenbart beidseitig siegelbare transparente, coextrudierte Polyolefinmehrschichtfolie mit einer basischicht im wesentlichen aus Propylenpolymeren und Deckschicht im wesentlichen aus siegelbare Olefinpolymeren. GB-A-2 055 688 offenbart eine transparente Schrumpffolie mit als Hauptbestandteil Polypropylen mit einem Schrumpfvermögen bei 120°C in der Längsrichtung (machine direction) ≧ 3.5% und in der Querrichtung (transverse direction) ≧ 3.5%.

EP-A-0 164 493 offenbart eine Folie, die peroxidisch abgebautes Polypropylen enthält.

Die Aufgabe der vorliegenden Erfindung bestand nun darin, eine biaxial orientierte, beidseitig siegelbare Polyolefin-Mehrschichtfolie zur Verfügung zu stellen, die exzellente optische Eigenschaften (niedrige Folientrübung, hoher Oberflächenglanz) und eine gute Maschinengängigkeit auf schnell laufenden Einschlagmaschinen zeigt und ein enges, werbewirksames, wellen- und faltenfreies Einschlagbild liefert.

Gelöst wird diese Aufgabe durch eine Mehrschichtfolie der eingangs genannten Gattung, deren bevorzugte Merkmale darin zu sehen sind, daß

a) die Mehrschichtfolie bei 120 °C einen Längsschrumpf von größer 7 %, vorzugsweise von 8 bis 15 %, und einen Querschrumpf von größer 5 %, vorzugsweise von 6 bis 12 %, besitzt, wobei die Schrumpfwerte gemäß DIN 404 34 bestimmt werden,

b) die Basisschicht der Mehrschichtfolie im wesentlichen aus einem Propylenhomopolymeren besteht, das peroxidisch abgebaut ist, wobei vorzugsweise sein Abbaufaktor A im Bereich von 3 - 10 liegt

c) die Deckschichten der Mehrschichtfolie im wesentlichen aus einem statistischen Ethylen-Propylen-Copolymeren bestehen, das einen Ethylengehalt von 2 - 8 Gew.-%, vorzugsweise von 3 - 7 Gew.-%, einen Verteilungsfaktor $V_F$ von größer 8 und eine Thermooxidationstemperatur $T_{OX}$ von größer 230 °C besitzt. Die Oberflächenschichten (Siegelschichten, Deckschichten) enthalten mindestens ein Antiblockmittel

d) die Dicke der Deckschichten aus dem statistischen Copolymeren bei größer 0,4 µm, vorzugsweise bei 0,5 µm bis 1,0 µm liegt

e) die Basisschicht und die Siegelschichten zusätzlich übliche Additive, insbesondere Gleitmittel, Antistatika, Neutralisationsmittel und Stabilisatoren enthalten

f) der Oberflächenglanz (Meßwinkel 20°) der Folie bei größer 100, vorzugsweise bei 105 bis 130 liegt

g) die Mehrschichtfolie eine Trübung (4-lagig gemessen) von kleiner 22 %, vorzugsweise von 18 - 10 % besitzt.

Eine oder beide Siegelschichten kann auf freier Oberfläche coronabehandelt sein, wobei die Oberflächenspannung direkt nach der Herstellung bei größer 36 mN/m, vorzugsweise zwischen 38 und 41 mN/m liegt.

Die erfindungsgemäße Folie zeichnet sich insbesondere durch hervorragende, an den Einsatzzweck angepaßte Schrumpfeigenschaften aus.

Überraschenderweise hat sich gezeigt, daß eine Folie der eingangs genannten Gattung mit einem erhöhtem Längsschrumpf von größer 7 % bei 120 °C, vorzugsweise von 8 bis 15 %, und einem erhöhten Querschrumpf von größer 5 % bei 120 °C, vorzugsweise von 6 bis 12 %, wobei die Schrumpfwerte gemäß DIN 404 34 bestimmt werden, im Vergleich zu den dimensionsstabilen Folien nach dem Stand der Technik, ein deutlich engeres, falten- und wellenfreies Einschlagbild liefert. Durch den engen, falten- und wellenfreien Einschlag, in Kombination mit einer niedrigen Folientrübung und einem hohen Oberflächenglanz, gewinnen die mit Folie eingeschlagenen Packungen ein wesentlich attraktiveres, brillanteres, werbewirksames Aussehen.

Überraschenderweise hat sich auch gezeigt, daß die Schrumpfeigenschaften zur Erzielung dieses Effektes in engen Grenzen eingehalten werden sollten.

Liegt der Längsschrumpf (gemessen bei 120 °C) wesentlich unter 7 % und/oder liegt der Querschrumpf (gemessen bei 120 °C) wesentlich unter 5 %, so zeigen die Packungen einen losen, blusigen Einschlag mit Falten- und Wellenbildung an den Kanten.

Liegen die Schrumpfwerte in Längsrichung wesentlich über 15 % und/oder liegen die Schrumpfwerte in Querrichtung wesentlich über 12 %, so können die Packungen, insbesondere Weichpackungen, durch den Einschlag deformiert werden. Bei zu hohen Schrumpfwerten sehen die Siegelnähte außerdem unschön aus, da sich Schrumpffältchen im Siegelbereich bilden.

Die angegebenen Längs- und Querschrumpfwerte beziehen sich jeweils auf die jeweilige Längenausdehnung der Folie vor dem Schrumpfprozeß. Die angegebenen Schrumpfwerte sind im Umluftofen bei einer Temperatur von 120 °C und einer Dauer von 15 min gemäß DIN 404 34 ermittelt worden.

Die Basischicht besteht aus einem peroxidisch abgebauten Propylenpolymeren, das zum überwiegenden Teil aus Propylen besteht und einen Schmelzpunkt im Bereich von 162 bis 168 °C besitzt. Isotaktisches Polypropylen mit einem n-heptanlöslichen Anteil von 6 Gew.-% und weniger stellt ein bevorzugtes Propylenpolymeres dar. Um die geforderte gute Optik zu erreichen, hat das peroxidisch abgebaute Polypropylenhomopolymerisat einen Abbaufaktor A von 3 bis 10, vorzugsweise von 4 bis 8. Der Schmelzindex des Polypropylen-Ausgangspulvers liegt bei kleiner 1,5 g/10 min, vorzugsweise bei 0,2 bis 0,9 g/10 min (Messung DIN 53 735, 21,6 N Belastung und 230 °C). Das Polypropylen-Ausgangspulver wird durch Zusatz von organischen Peroxiden [z. B. Dialkylperoxide wie 2,5-Dimethyl-2,5-di-(t-butylperoxy)-hexan oder Di-t-butylperoxid] beim Extrudieren auf einen Granulat-Schmelzindex von 2 bis 5,5 g/10 min (Messung DIN 53 735, 21,6 N Belastung und 230 °C) abgebaut. Der Abbaufaktor A des Polypropylenhomopolymerisates ist definiert als

$$A=\frac{S_{G(PP)}}{S_{P(PP)}}$$

mit $S_{G(PP)}$= Schmelzindex des abgebauten Polypropylen-Granulates
und $S_{P(PP)}$= Schmelzindex des Polypropylen-Ausgangspulvers, wobei der Schmelzindex nach DIN 53 735 (21,6 N Belastung, 230 °C) gemessen wird.

Der peroxidische Abbau bzw. peroxidisch abgebaute oder CR ("controlled rheology") Polypropylen-Homopolymere als solche sind in der Literatur bekannt (vgl. Plastverarbeiter, 38. Jahrgang, 1987, Nr. 4; Polymer Engineering and Science, März 1989, Vol. 29, No. 6; Plastverarbeiter, 36. Jahrgang, 1985, Nr. 11). Derartige peroxidisch abgebaute Polypropylen-Homopolymere kommen insbesondere bei der Spritzgußtechnik und der Faserherstellung zum Einsatz. Wie groß der Abbaufaktor bei diesen Produkten ist, wird aber nicht beschrieben.

Überraschenderweise hat sich gezeigt, daß für einen erfolgversprechenden Einsatz der erfindungsgemäßen Folien als Einschlagfolien der Abbaufaktor des Polypropylenhomopolymeren der Basisschicht in engen Grenzen eingehalten werden sollte.

Liegt der Abbaufaktor des Polypropylenhomopolymerisates unter 3, so verschlechtern sich die optischen Eigenschaften (deutliche Erhöhung der Folientrübung, Erniedrigung des Oberflächenglanzes). Liegt der Abbaufaktor über 10, so treten Probleme bei der Verstreckung auf, was sich äußerst negativ auf die Laufsicherheit bei der Folienproduktion auswirkt. Bei einem Abbaufaktor über 10 ist das Polypropylenhomopolymere nur noch in einem sehr engen Temperaturbereich oder gar nicht mehr verstreckbar.

Die siegelbaren Oberflächenschichten bestehen im wesentlichen aus einem statistischen Ethylen-Propylen-Copolymeren, das einen Ethylengehalt von 2 - 8 Gew.-%, vorzugsweise von 3 - 7 Gew.-%, einen Verteilungsfaktor $V_F$ von größer 8 und eine Thermooxidationstemperatur $T_{OX}$ von größer 230 °C besitzt.

Der Ethylengehalt und der Verteilungsfaktor des Copolymeren wurden mit Hilfe der $^{13}C$-NMR-Spektroskopie bestimmt. Die Messungen wurden mit einem Kernresonanzspektrometer der Firma Bruker, Modell HX-270 (Deutschland), das mit einem Rechner der Firma Bruker, Typ Bruker Aspect 2000 ausgerüstet war, durchgeführt.

Das zu charakterisierende Ethylen-Propylen-Copolymere wurde in einem Lösungsmittelgemisch aus 65 Vol-% Hexachlorbenzol und 35 Vol-% 1,1-Dideuterotetrachlorethan gelöst, so daß eine 10 Gew.-%-Lösung entstand. Als Bezugsstandard wurde Octamethyltetrasiloxan (OMTS) zugegeben. Das 67,9-MHz-$^{13}C$-Kernresonanzspektrum wurde bei 130 °C gemessen. Die Auswertung der Spektren erfolgte nach der in J.C. Randall, Polymer Sequence Distribution (Academic Press, New York, 1977) beschriebenen Vorgehensweise.

Der Verteilungsfaktor ist definiert als

$$V_F = \frac{C_i}{C_G - C_i}$$

wobei $C_G$ den Gesamtgehalt an Ethylen im Copolymerisat in Gew.-% bedeutet und $C_i$ den Anteil an Ethylen in Gew.-%, der als isolierter Ethylenanteil vorliegt, d. h. ein einzelner Ethylenbaustein befindet sich in der nachfolgend skizzierten Art isoliert zwischen zwei Propylenbausteinen:

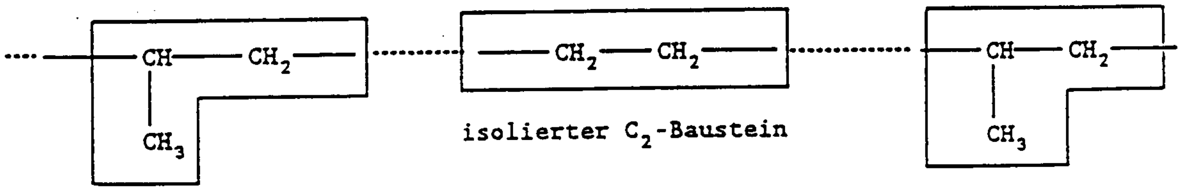


Die Bestimmung der idealisierten Thermooxidationstemperatur $T_{OX}$ erfolgte auf folgende Weise: 2 bis 5 mg des zu untersuchenden Rohstoffs wurden in einem Differentialkalorimeter mit einer Heizrate von 20 K/min aufgeheizt. Als Spülgas wurde Luft verwendet, die Ausgangstemperatur betrug 295 K. Bei der Messung wurde die Veränderung des Wärmeflusses mit ansteigender Temperatur dargestellt. Während diese Kurve nach dem Schmelzen des Rohstoffs zunächst nahezu waagerecht verlief (Basislinie), stiegen diese Werte infolge Oxidation ab einer bestimmten Temperatur stark an (exothermer Ast).

Die idealisierte Thermooxidationstemperatur wird als Schnittpunkt der den exothermen Ast des Thermogramms verlängernden Geraden mit der Basislinie definiert.

Überraschenderweise hat sich gezeigt, daß die genannten Parameter für das Propylen-Ethylen-Copolymere der polyolefinischen Oberflächenschichten der erfindungsgemäßen Folie in sehr engen Grenzen eingehalten werden sollten, um alle in der Aufgabenstellung genannten Eigenschaften gleichzeitig optimal zu realisieren. Der Ethylengehalt und der Verteilungsfaktor $V_F$ des Copolymeren sind für die Oberflächenbehandelbarkeit mittels elektrischer Coronaentladung, für die Langzeitbedruckbarkeit sowie für die optischen Eigenschaften von Bedeutung. Liegt der Ethylengehalt unter 2,0 Gew.-%, so verschlechtert sich die Coronabehandelbarkeit und das Abklingverhalten der Behandlungswirkung wird ungünstig. Liegt der Ethylengehalt über 7,0 Gew.-% oder der Verteilungsfaktor unter 8, so verschlechtern sich die optischen Eigenschaften, insbesondere der Oberflächenglanz.

Die Thermooxidationstemperatur ist für die Farbhaftung von besonderer Bedeutung. Liegt die Thermooxidationstemperatur der bedruckbaren Deckschicht unter 230 °C, so bilden sich aufgrund der Coronabehandlung Abbauprodukte in dem Maße auf der Oberfläche, daß die Haftung der Druckfarbe verschlechtert wird.

Erfindungsgemäß enthalten die Deckschichten mindestens ein Antiblockmittel.

Geeignete Antiblockmittel für diese Schichten sind anorganische Zusatzstoffe wie Siliciumdioxid, Calciumcarbonat, Magnesiumsilikat und/oder Antiblockmittel wie z. B. Polyamide, Polyester sowie insbesondere Benzoguanamin-Formaldehyd-Copolymere und dergleichen. Wesentlich für das Antiblockmittel ist, daß die mittlere Teilchengröße zwischen 1 und 6 µm, vorzugsweise zwischen 2 und 5 µm liegt. Siliziumdioxid und Calciumcarbonat sind als Antiblockmittel bevorzugt.

Besonders bevorzugt werden diese Mittel eingesetzt, wenn sie kugelförmige Gestalt besitzen. Derartige kugelförmige anorganische Materialien und deren Zusatz zu Folien aus thermoplastischen Kunststoffen werden z. B. in der EP-A-0 236 945 und der DE-A-38 01 535 beschrieben. Die Zusatzmenge an Antiblockmittel beträgt 0,1 bis 2 Gew.-%, vorzugsweise 0,1 bis 0,5 Gew.-%, bezogen auf das Gesamtgewicht der Oberflächenschicht.

Die Schichtdicke der Siegelschichten liegt bei größer 0,4 µm, vorzugsweise zwischen 0,4 und 1,0 µm. Liegt die Schichtdicke unter 0,4 µm, so verschlechtern sich die Siegeleigenschaften (Erhöhung der Siegelanspringtemperatur, Erniedrigung der Siegelnahtfestigkeit) drastisch. Bei Schichtdicken von größer 1,0 µm verschlechtern sich die Folienoptik und das Verarbeitungsverhalten.

Um bestimmte Eigenschaften der erfindungsgemäßen Polyolefinfolie noch weiter zu verbessern, können sowohl die Basisschicht als auch die Siegelschichten entsprechende Zusätze in einer jeweils wirksamen Menge enthalten, vorzugsweise Antistatika, Gleitmittel, Stabilisatoren und/oder Neutralisationsmittel.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy($C_1$-$C_4$)alkyl-Gruppen substituiert sind, worunter N,N-bis-(2-hydroxyethyl)-alkylamine mit 10 bis 20, vorzugsweise 12 bis 18 Kohlenstoffatomen im Alkylrest besonders geeignet sind.

Die wirksame Menge an Antistatikum liegt im Bereich von 0,05 bis 0,3 Gew.-% bezogen auf die Schicht.

Beispiele für Gleitmittel sind höhere aliphatische Säureamide, höhere aliphatische Säureester, Wachse und Metallseifen sowie Polydimethylsiloxan. Die wirksame Menge an Gleitmittel liegt im Bereich von 0,1 bis 3 Gew.-%, bezogen auf das Gewicht der Schicht. Als besonders geeignet hat sich der Zusatz von höheren aliphatischen Säureamiden, z. B. Erucasäureamid, mit 0,15 bis 0,25 Gew.-% in der Basisschicht und/oder den Deckschichten erwiesen. Sehr gute Ergebnisse werden durch den Zusatz von Polydimethylsiloxan in einer oder mehreren Deckschichten erreicht. Die Zusatzmenge liegt zweckmäßig im Bereich von 0,3 bis 2,0 Gew.-%, wobei die Viskosität des Polydimethylsiloxans zwischen 10.000 und 1.000.000 $mm^2/s$ liegt.

Die Basisschicht und die Oberflächenschichten enthalten vorzugsweise einen phenolischen Stabilisator mit einer Molmasse von mehr als 500 g/mol. Als Stabilisator eignen sich besonders Pentaerythrityl-Tetrakis-3-(3,5-di-Tertiärbutyl-4-Hydroxyphenyl)-propionat oder 1,3,5-Trimethyl-2,4,6-tris(3,5-di-Tertiärbutyl-4-Hydroxybenzyl)benzol. Die Zusatzmenge beträgt 0,1 bis 0,6 Gew.-%, vorzugsweise 0,15 bis 0,3 Gew.-%. Zur Neutralisation der Katalysatorreste des Basisrohstoffes und des Deckschichtrohstoffes wird vorzugsweise Calciumstearat und/oder Calciumkarbonat einer mittleren Teilchengröße von höchstens 0,07 mm, einer absoluten Teilchengröße von kleiner 5 µm und einer spezifischen Oberfläche von mindestens 40 $m^2/g$ eingesetzt. Die Zusatzmenge beträgt 0,01 bis 0,05 Gew.-%.

Das Ethylen-Propylen-Copolymere der Deckschichten besitzt einen niedrigeren Schmelzpunkt als das peroxidisch abgebaute Polypropylenpolymere der Basisschicht. Der Schmelzpunkt des Deckschichtrohstoffes liegt im allgemeinen im Bereich von 80 - 150 °C.

Der Schmelzflußindex des Copolymeren der Siegelschichten liegt höher als der des Polypropylenhomopolymeren der Basisschicht. Der Schmelzflußindex des Ethylen-Propylen-Copolymeren beträgt im allgemeinen 5 bis 12 g/10 min bei 230 °C und 21,6 N Belastung (DIN 53 735).

Die Gesamtdicke der erfindungsgemäßen Mehrschichtfolie kann innerhalb weiter Grenzen variieren und richtet sich insbesondere nach dem beabsichtigten Einsatz. Ihre Gesamtdicke beträgt im allgemeinen 10 - 60 µm, vorzugsweise 15 - 40 µm, wobei die Siegelschichten jeweils größer 0,4 µm, vorzugsweise 0,5 - 1,0 µm dick sind (die Dicke der Basisschicht macht etwa 50 bis 90 % der Gesamtdicke aus).

Die erfindungsgemäße Mehrschichtfolie zeichnet sich insbesondere durch ihre hervorragenden optischen Eigenschaften und die beschriebenen, erhöhten Schrumpfeigenschaften in Längs- und Querrichtung aus. Ihr Oberflächenglanz (Meßwinkel 20°) liegt bei größer 100, vorzugsweise bei 105 bis 130, bestimmt nach DIN 67 530, und die Trübung der Folie (4-lagig gemessen) beträgt weniger als 22 %, vorzugsweise 10 bis 18 %, wobei die Trübung in Anlehnung an ASTM-D 1003-52 gemessen wird.

Die beschriebenen hohen Schrumpfwerte erhält man überraschenderweise durch folgende Veränderungen der üblichen Verfahrensbedingungen:

- Absenkung der Temperatur bei der Streckung
- Erhöhung des Längsstreckverhältnisses
- Erniedrigung des Querstreckverhältnisses
- Erhöhung der Konvergenz

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Extrusion bzw. Coextrusion der den einzelnen Schichten entsprechenden Schmelzen aus einer Breitschlitzdüse zunächst eine Vorfolie hergestellt wird, die dann auf einer Kühlwalze verfestigt und daran anschließend in Längs- und Querrichtung durch Strecken orientiert wird. Erfindungsgemäß werden die Bedingungen bei der Längsstreckung so gewählt, daß die längsgestreckte Folie hoch orientiert ist. Die Voraussetzungen für die Erzielung eines hohen Längsschrumpfes sind dann besonders günstig. Die Längsstreckung wird durchgeführt bei einer Temperatur von weniger als 120 °C, vorzugsweise im Bereich von 95 - 115 °C, und mit einem Streckverhältnis von größer 5, vorzugsweise im Bereich von 5,5 - 8,0.

Günstige Querstrecktemperaturen liegen bei größer 140 °C, vorzugsweise bei 145 - 160 °C. Das Querstreckverhältnis soll andererseits einen Wert von 10:1 nicht überschreiten. Bevorzugt wird hier ein Bereich von 9:1 bis 6:1.

Nach der Streckung der Folie in Querrichtung schließt sich eine abschließende Fixierstufe an. Dabei wird die Folie bei einer Temperatur, die 20 bis 40 °C unterhalb der Strecktemperatur liegt, insbesondere bei einer Temperatur unterhalb von 130 °C, vorzugsweise unterhalb von 120 °C, in dem Streckrahmen konvergierend weitergeführt. Die Konvergenz während der Fixierstufe beträgt vorzugsweise 15 bis 20 %.

Die Bedruckbarkeit, Metallisierbarkeit bzw. Verklebbarkeit der Folie wird durch eine der üblichen Oberflächenbehandlungen vor dem Aufrollen erreicht, z. B. elektrische Coronabehandlung und/oder Flammbehandlung. Die Behandlungsintensitäten liegen im üblichen Rahmen von mehr als 36 mN/m. Behandlungsintensitäten von 38 bis 41 mN/m sind bevorzugt.

Die erfindungsgemäße, schrumpfende Mehrschichtfolie besitzt eine Kombination von Eigenschaften, die sie in besonders hohem Maße geeignet macht für ihren bestimmungsgemäßen Verwendungszweck als Verpackungsfolie oder

Einschlagfolie auf schnell laufenden Einschlagmaschinen. Sie weist all die Eigenschaften auf, die von Polyolefinfolien im Hinblick auf ein enges, falten- und wellenfreies, brilliantes, werbewirksames Einschlagbild gefordert werden.

Sie weist insbesondere auf:

- einen hohen Längsschrumpf (gemessen bei 120 °C) von größer 7 %, vorzugsweise von 8 bis 15 %,
- einen hohen Querschrumpf (gemessen bei 120 °C) von größer 5 %, vorzugsweise von 6 bis 12 %,
- einen niedrige Folientrübung und eine homogene Folienoptik,
- einen beidseitig hohen Oberflächenglanz,
- eine beidseitige Siegelbarkeit,
- eine hohe Kratzfestigkeit beider Oberflächenschichten
- eine gute Oberflächenbehandelbarkeit,
- gute Sofort- und Langzeitbedruckbarkeits- und beschichtbarkeitseigenschaften,
- gute Weiterverarbeitungseigenschaften.

Verzichtet man auf die Flamm- oder Coronabehandlung, so eignet sich die erfindungsgemäße Polyolefinmehrschichtfolie insbesondere als Zigaretteneinschlagfolie, da sie neben den wichtigen Eigenschaften, die im Hinblick auf schnellaufende Verpackungsmaschinen gefordert werden, eine extrem niedrige Trübung und einen hohen Glanz besitzt. Außerdem erzeugt sie einen sehr engen, falten- und wellenfreien Zigaretteneinschlag, der brilliant und werbewirksam aussieht.

Die Erfindung wird nun anhand von Ausführungsbeispielen noch weiter erläutert.

Beispiel 1

Mit Hilfe des Coextrusionsverfahrens wird aus einer Breitschlitzdüse bei einer Extrusionstemperatur von 260 °C als Summe eine 1 mm dicke Dreischichtfolie extrudiert, deren Basisschicht aus einem peroxidisch abgebauten (isotaktischen) Polypropylen-Homopolymerisat mit einem n-heptanlöslichen Anteil von 4,5 Gew.-% und einem Schmelzpunkt von 165 °C als Hauptkomponente besteht.

Das Polypropylenpolymere wurde von einem Polypropylen-Ausgangspulver mit einem Schmelzindex $S_{P(PP)}$ von 0,7 g/10 min (bestimmt nach DIN 53 735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 5 ergibt.

Die Basisschicht ist von zwei Siegelschichten (Außenschichten, Deckschichten) umgegeben, d. h. die Dreischichtfolie zeigt einen A-B-A-Aufbau (A = Siegelschichten, B = Basisschicht).

Alle Schichten enthalten zur Stabilisierung 0,12 Gew.-% Pentaerythrityl-Tetrakis-3-(3,5-ditertiärbutyl-4-hydroxyphenyl)-propionat ($^{(R)}$Irganox 1010) sowie zur Neutralisierung saurer Katalysatorreste 0,06 Gew.-% Calciumstearat. Die Basisschicht enthält weiterhin 0,15 Gew.-% an N,N-bis-(2-hydroxyethyl)-N-($C_{10}$-$C_{20}$)-alkylamin ($^{(R)}$Armostat 300) als Antistatikum.

Die polyolefinischen Siegelschichten bestehen aus einem statistischen Copolymerisat aus Ethylen- und Propylenbausteinen mit einem Ethylengehalt von 4,5 Gew.-% und einem Propylengehalt von 95,5 Gew.-%. Das Copolymerisat ist mit 0,33 Gew.-% Siliciumdioxid mit einem mittleren Teilchendurchmesser von 2,0 µm und 0,8 Gew.-% Polydimethylsiloxan mit einer kinematischen Viskosität von 30.000 $mm^2/s$ bei 25 °C ausgerüstet. Das Ethylen-Propylen-Copolymere besitzt folgende Eigenschaften:

- Verteilungsfaktor: $V_F$ = 17
- idealisierte Thermooxidationstemperatur: 256 °C
- Schmelzflußindex: 6,0 g/10 min (DIN 53735)
- Schmelzpunkt: 135 °C

Die biaxial orientierte, mehrschichtige Polyolefinfolie wird über die Verfahrensschritte Coextrusion, Abkühlen, Längsstreckung, Querstreckung, Fixierung hergestellt. Die Gesamtdicke der biaxial orientierten Folie beträgt 20 µm, wobei die Deckschichten jeweils 0,8 µm dick sind.

Die Herstellungsbedingungen in den einzelnen Verfahrensschritten sind:

| | |
|---|---|
| Extrusion: | Extrusionstemperatur 260 °C |
| | Temperatur der Abzugswalze 60 °C |
| Längsstreckung: | Streckwalze T = 107 °C |
| | Kühlwalze T = 90 °C |
| | Längsstreckverhältnis $S_L$ = 6,5 |

| | |
|---|---|
| Querstreckung: | Aufheizfelder T = 163 °C |
| | Streckfelder T = 148 °C |
| | Querstreckverhältnis $S_Q$ = 8 |
| Fixierung: | Temperatur T = 120 °C |
| | Dauer t = 2 s |
| Konvergenz: | 18 % |

Beispiel 2

Beispiel 1 wird wiederholt.

Das (isotaktische) Polypropylen-Homopolymerisat der Basisschicht wird von einem Polypropylen-Ausgangspulver mit einem Schmelzindex $S_{P(PP)}$ von 0,5 g/10 min (bestimmt nach DIN 53735 bei 21,6 N Belastung und 230 °C) durch Zusatz von Di-t-butylperoxid auf einen Granulatschmelzindex $S_{G(PP)}$ von 3,5 g/10 min (DIN 53735 bei 21,6 N Belastung und 230 °C) abgebaut, woraus sich ein Abbaufaktor A von 7 ergibt.

Die hergestellte Dreischichtfolie besitzt jetzt allerdings einen A-B-C-Aufbau (A = Siegelschicht, C = Siegelschicht (=A), B = Basisschicht). Das Ethylen-Propylen-Copolymere der A-Schicht enthält 1,6 Gew.-% Polydimethylsiloxan mit einer kinematischen Viskosität von 500.000 $mm^2/s$ bei 25 °C und 0,3 Gew.-% Siliciumdioxid mit einem mittleren Teilchendurchmesser von 4 µm. Das statistische Copolymere der C-Schicht enthält 0,33 Gew.-% Siliciumdioxid mit einem mittleren Teilchendurchmesser von 2 µm und kein Polydimethylsiloxan. Die C-Schicht wird coronabehandelt, wobei die Oberflächenspannung dieser Schicht direkt nach der Herstellung bei 40 mN/m liegt.

Die Herstellbedingungen in den einzelnen Verfahrensschritten entsprechen denen aus Beispiel 1.

Vergleichsbeispiel 1

Es wird eine Dreischichtfolie hergestellt wie in Beispiel 1. Das isotaktische Propylen-Homopolymerisat besitzt ebenfalls einen Granulatschmelzindex von 3,5 g/10 min (DIN 53 735 bei 21,6 N Belastung und 230 °C). Das Polypropylenpolymere der Basisschicht ist aber nicht peroxidisch abgebaut.

Die Herstellbedingungen in den einzelnen Verfahrensschritten sind:

| | |
|---|---|
| Extrusion: | Extrusionstemperatur 260 °C |
| | Temperatur der Abzugswalze 60 °C |
| Längsstreckung: | Streckwalze T = 120 °C |
| | Kühlwalze T = 100 °C |
| | Längsstreckverhältnis $S_L$ = 5 |
| Querstreckung: | Aufheizfelder T = 175 °C |
| | Streckfelder T = 162 °C |
| | Querstreckverhältnis $S_Q$ = 10 |
| Fixierung: | Temperatur 130 °C |
| | Dauer 5 s |
| Konvergenz: | 10 % |

Vergleichsbeispiel 2

Es wird eine Dreischichtfolie mit einem A-B-C-Aufbau entsprechend Beispiel 1 der Europäischen Patentschrift 0 194 588 hergestellt.

Vergleichsbeispiel 3

Es wird eine Dreischichtfolie entsprechend Beispiel 4 der US-Patentschrift 44 19 411 hergestellt.

Zur Charakterisierung der Rohstoffe und der Folien wurden neben den obengenannten Methoden folgende Meßmethoden benutzt:

Schmelzflußindex:

DIN 53 735 bei 21,6 N Belastung und 230 °C.

Schmelzpunkt:

DSC-Messung, Maximum der Schmelzkurve, Aufheizgeschwindigkeit 20 °C/min.

Trübung:

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

$\leqq$ 17 % = sehr gut (++)

$\geqq$ 17 % bis 20 % = gut (+)

$\geqq$ 20 % bis 25 % = mäßig (±)

$\geqq$ 25 % = schlecht (-)

Glanz:

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20°) erfolgt mit:

$\geqq$ 115 = sehr gut (++)

$\leqq$ 115 bis 110 = gut (+)

$\leqq$ 110 bis 100 = mäßig (±)

$\leqq$ 100 = schlecht (-)

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (++) bezeichnet, wenn die Trübungszunahme kleiner 22 % beträgt, mit gut (+), wenn die Trübungszunahme bei 22 bis 25 % liegt, mit mäßig (±), wenn die Trübungszunahme bei 25 - 30 % liegt und mit schlecht (-) bei Trübungszunahmen von größer 30 %.

Bestimmung der Siegelnahtfestigkeit:

Zwei 15 mm breite Folienstreifen werden übereinandergelegt und bei 130 °C, einer Siegelzeit von 0,5 s und einem Siegeldruck von 1,5 N/$cm^2$ (Gerät: Brugger Typ NDS, einseitig beheizte Siegelbacke) versiegelt. Die Siegelnahtfestigkeit wird nach der T-Peel-Methode bestimmt.

Bestimmung der Siegelanspringtemperatur:

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegel-

druck von 15 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Bestimmung der Coronabehandlungsintensität:

Die Coronabehandlung wurde so ausgeführt, daß die behandelte Folienoberfläche jeweils eine Behandlungsintensität von bevorzugt 38 - 41 mN/m direkt nach der Behandlung besaß. Die Behandlungsintensität wurde mittels der sogenannten Tintenmethode (DIN 53 364) bestimmt.

Langzeitbehandlungsintensität:

Die Behandlungsintensitätsmessung wurde im Abstand von jeweils 14 Tagen wiederholt. Als sehr gut wurde das Abklingverhalten bezeichnet, wenn die Behandlungsintensität nach vier Monaten noch mindestens 37 mN/m betrug ( $\Delta$ B $\leqq$ 2mN/m). Als schlecht wurde das Abklingverhalten bezeichnet, wenn die Behandlungsintensität kleiner als 35 mN/m betrug ( $\Delta$ B $\geqq$ 4mN/m).

Schrumpf:

Die Längs- und Querschrumpfwerte beziehen sich jeweils auf die jeweilige Längenausdehnung der Folie vor dem Schrumpfprozeß. Die Schrumpfwerte werden im Umluftofen bei einer Temperatur von 120 °C und einer Dauer von 15 min gemäß DIN 404 34 ermittelt.

Maschinengängigkeit:

Die Bestimmung der Maschinengängigkeit auf der Einschlagmaschine erfolgte visuell und wurde wie folgt bewertet:

| | |
|---|---|
| sehr gut (++) < 2 | % der Probepäckchen sind mangelhaft eingeschlagen |
| gut (+) 2-6 % | der Probepäckchen sind mangelhaft eingeschlagen |
| mäßig (+-) 6-12 % | der Probepäckchen sind mangelhaft eingeschlagen |
| schlecht (-) 12 % | und mehr der Probepäckchen sind mangelhaft eingeschlagen |

Einschlagbild:

Das Einschlagbild wurde visuell beurteilt (vgl. Tabelle 1).

Die Überlegenheit der erfindungsgemäßen Folie entsprechend Beispiel 1 und Beispiel 2 geht aus Tabelle 1 deutlich hervor. Die Vergleichsbeispiele 1 bis 3 zeigen zwar bei einzelnen Punkten jeweils gute Eigenschaften, allerdings kann keine Mehrschichtfolie nach den Vergleichsbeispielen alle Anforderungen gleichzeitig erfüllen.

Die Mehrschichtfolien nach dem Strand der Technik weisen alle deutlich niedrigere Schrumpfwerte in Längs- und Querrichtung auf und liefern folglich einen losen, blusigen Packungseinschlag mit Falten und Wellen an den Kanten. Außerdem haben die Mehrschichtfolien nach dem Stand der Technik eine deutlich höhere Folientrübung und einen niedrigeren Oberflächenglanz.

Lediglich die erfindungsgemäßen Mehrschichtfolien nach den Beispielen 1 und 2 erfüllen alle Anforderungen gleichzeitig und führen in Folge des engen, falten- und wellenfreien Einschlags in Kombination mit guten optischen

Eigenschaften zu einer eingeschlagenen Packung, die ein attraktives, brilliantes, werbewirksames Aussehen besitzt.

Tabelle 1

| | Trübung (4-lagig) [%] | Glanz (Meßwinkel 20°) 1. Seite | Glanz (Meßwinkel 20°) 2. Seite | Kratzfestigkeit [%] 1. Seite | Kratzfestigkeit [%] 2. Seite | Längsschrumpf (120°C/15 min) [%] | Querschrumpf (120°C/15 min) [%] | Maschinengängigkeit (visuelle Beurteilung) Einschlagmaschine | Einschlagbild (visuelle Beurteilung) |
|---|---|---|---|---|---|---|---|---|---|
| B1 | ++ | ++ | ++ | ++ | ++ | 12,0 | 9,0 | ++ | eng, faltenfrei |
| B2 | ++ | ++ | ++ | ++ | ++ | 11,0 | 9,0 | ++ | eng, faltenfrei |
| VB1 | + | + | + | ++ | ++ | 3,5 | 2,0 | + | lose, blusig, Wellen und Falten an den Kanten |
| VB2 | - | - | - | + | + | 2,5 | 1,5 | + | lose, blusig, Wellen und Falten an den Kanten |
| VB3 | - | - | - | + | + | 3,0 | 1,5 | + | lose, blusig, Wellen und Falten an den Kanten |

B = Beispiel
VB = Vergleichsbeispiel

## Patentansprüche

1. Beidseitig siegelbare, schrumpffähige, biaxial orientierte Polyolefin-Mehrschichtfolie, gekennzeichnet durch eine Basisschicht und mindestens eine Siegelschicht auf jeder Seite der Basisschicht, wobei die Basisschicht ein peroxidisch abgebautes Propylenhomopolymerisat und die Siegelschichten ein Ethylen-Propylen-Copolymeres enthalten, wobei die Siegelschichten ein Antiblockmittel enthalten und wobei die Mehrschichtfolie bei 120 °C einen

Längsschrumpf von größer 7 % und einer Querschrumpf bei 120 °C von größer 5 % aufweist, wobei die Schrumpfwerte gemäß DIN 404 34 bestimmt werden.

2. Polyolefin-Mehrschichtfolie nach Anspruch 1, dadurch gekennzeichnet, daß der peroxidische Abbaufaktor der Basisschicht im Bereich von 3 bis 10 liegt.

3. Polyolefin-Mehrschichtfolie nach Anspruch 1 oder 2, dadurch gekennzeichnet, daß der Ethylen-Gehalt in der Copolymermischung der Siegelschichten 2 bis 8 Gew.-% Ethylen beträgt.

4. Polyolefin-Mehrschichtfolie nach einem oder mehreren der Ansprüche 1 bis 3, dadurch gekennzeichnet, daß der Verteilungsfaktor $V_F$ der Siegelschichten größer 8 ist.

5. Polyolefin-Mehrschichtfolie nach einem oder mehreren der Ansprüche 1 bis 4, dadurch gekennzeichnet, daß die Thermooxidationstemperatur der Siegelschichten größer 230 °C ist.

6. Polyolefin-Mehrschichtfolie nach einem oder mehreren der Ansprüche 1 bis 5, dadurch gekennzeichnet, daß der Oberflächenglanz der Folie größer 100 ist.

7. Polyolefin-Mehrschichtfolie nach einem oder mehreren der Ansprüche 1 bis 6, dadurch gekennzeichnet, daß die Trübung der Folie kleiner 22 % ist.

8. Polyolefin-Mehrschichtfolie nach einem oder mehreren der Ansprüche 1 bis 7, dadurch gekennzeichnet, daß das Antiblockmittel Siliciumdioxid und/oder Calciumcarbonat ist.

9. Polyolefin-Mehrschichtfolie nach einem oder mehreren der Ansprüche 1 bis 8, dadurch gekennzeichnet, daß mindestens eine äußere Siegelschicht coronabehandelt ist.

10. Polyolefin-Mehrschichtfolie nach Anspruch 9, dadurch gekennzeichnet, daß die äußere coronabehandelte Siegelschicht direkt nach der Herstellung eine Oberflächenspannung von größer 36 mN/m aufweist.

11. Polyolefin-Mehrschichtfolie nach einem oder mehreren der Ansprüche 1 bis 10, dadurch gekennzeichnet, daß die Schichtdicke der jeweiligen Siegelschicht größer 0,4 µm ist.

12. Polyolefin-Mehrschichtfolie nach einem oder mehreren der Ansprüche 1 bis 11, dadurch gekennzeichnet, daß die Basisschicht und/oder die Siegelschichten Additive enthalten.

13. Verfahren zur Herstellung einer Polyolefin-Mehrschichtfolie nach einem oder mehreren der Ansprüche 1 bis 12, bei dem man die den einzelnen Schichten der Folie entsprechenden Schmelzen durch eine Flachdüse coextrudiert, die so erhaltene Folie zur Verfestigung abkühlt, die Folie biaxial in Längs- und Querrichtung orientiert, die biaxial orientierte Folie thermofixiert und gegebenenfalls an der zur Coronabehandlung vorgesehenen Oberflächenschicht coronabehandelt, dadurch gekennzeichnet, daß die Längsstreckung bei einer Temperatur von weniger als 120 °C und mit einem Streckverhältnis von größer 5:1 und die Querstreckung bei einer Temperatur von größer 140 °C und mit einem Streckverhältnis von kleiner oder gleich 10:1 durchgeführt wird.

14. Verwendung der Polyolefin-Mehrschichtfolie nach einem oder mehreren der Ansprüche 1 bis 12 als Verpackungsfolie.

15. Verwendung der Polyolefin-Mehrschichtfolie nach einem oder mehreren der Ansprüche 1 bis 8 und/oder 11 bis 12 als Zigaretteneinschlagfolie.

## Claims

1. Biaxially oriented, shrinkable multilayer polyolefin film which is heat-sealable on both sides, wherein it has a base layer and at least one heat-sealing layer on either side on the base layer, the base layer comprising a peroxidically degraded propylene homopolymer and the heat-sealing layers an ethylene-propylene copolymer, the heat-sealing layers containing an antiblocking agent and the multilayer film showing a longitudinal shrinkage of more than 7 % at 120°C and a transverse shrinkage of more than 5 % at 120°C, the shrinking values being determined according to DIN 40434.

2. The multilayer polyolefin film as claimed in claim 1, wherein the peroxidic degradation factor of the base layer is in the range from 3 to 10.

3. The multilayer polyolefin film as claimed in claim 1 or 2, wherein the ethylene content in the copolymer mixture of the heat-sealing layers amounts to 2 to 8 % by weight of ethylene.

4. The multilayer polyolefin film as claimed in one or several of claims 1 to 3, wherein the distribution factor $V_F$ of the heat-sealing layers is greater than 8.

5. The multilayer polyolefin film as claimed in one or several of claims 1 to 4, wherein the thermooxidation temperature of the heat-sealing layers is above 230 °C.

6. The multilayer polyolefin film as claimed in one or several of claims 1 to 5, wherein the surface gloss of the film is greater than 100.

7. The multilayer polyolefin film as claimed in one or several of claims 1 to 6, wherein the haze of the film is less than 22 %.

8. The multilayer polyolefin film as claimed in one or several of claims 1 to 7, wherein the antiblocking agent employed comprises silicon dioxide and/or calcium carbonate.

9. The multilayer polyolefin film as claimed in one or several of claims 1 to 8, wherein at least one outer heat-sealing layer is corona-treated.

10. The multilayer polyolefin film as claimed in claim 9, wherein the outer corona-created heat-sealing layer has, immediately after production, a surface tension of more than 36 mN/m.

11. The multilayer polyolefin film as claimed in one or several of claims 1 to 10, wherein the layer thickness of each heat-sealing layer is greater than 0.4 µm.

12. The multilayer polyolefin film as claimed in one or several of claims 1 to 11, wherein the base layer and/or the heat-sealing layers contain additives.

13. Process for the production of a multilayer polyolefin film as claimed in one or several of claims 1 to 12, with the melts corresponding to the individual layers of the film being coextruded through a flat-sheet die, the film thus obtained is cooled for solidification, the film is biaxially stretched in longitudinal and transverse direction, and the biaxially oriented film is heat-set and optionally corona-treated on the surface layer intended for corona treatment, wherein the stretching in longitudinal direction is carried out at a temperature of less than 120°C and a stretching ratio greater than 5 %, and the stretching in transverse direction at a temperature of more than 140°C and at a stretching ratio of less than or equal 10:1.

14. Use of the multilayer polyolefin film as claimed in one or several of claims 1 to 12 as a packaging film.

15. Use of the multilayer polyolefin film as claimed in one or several of claims 1 to 8 and/or 11 and 12 as a cigarette packaging film.

**Revendications**

1. Pellicule multicouche à base de polyoléfine, orientée biaxalement, rétractable et soudable des deux côtés, caractérisée par une couche de base et au moins une couche de soudage sur chaque coté de la couche de base, la couche de base contenant un homopolymère de propylène dégradé par un peroxyde et les couches de soudage contenant un copolymère éthylène/propylène, les couches de soudage contenant un agent anti-adhérence de contact et la pellicule multicouche présentant à 120°C un retrait longitudinal de plus de 7 % et un retrait transversal à 120°C de plus de 5 %, les valeurs des retraits étant déterminées selon DIN 40 434.

2. Pellicule multicouche à base de polyoléfine selon la revendication 1, caractérisée en ce que le facteur de dégradation par un peroxyde de la couche de base se situe dans la plage allant de 3 à 10.

3. Pellicule multicouche à base de polyoléfine selon la revendication 1 ou 2, caractérisée en ce que la teneur en éthylène de la composition de copolymère des couches de soudage va de 2 à 8 % en poids d'éthylène.

4. Pellicule multicouche à base de polyoléfine selon une ou plusieurs des revendications 1 à 3, caractérisée en ce que le facteur de distribution $V_F$ des couches de soudage est supérieur à 8.

5. Pellicule multicouche à base de polyoléfine selon une ou plusieurs des revendications 1 à 4, caractérisée en ce que la température de thermo-oxydation des couches de soudage est supérieure à 230°C.

6. Pellicule multicouche à base de polyoléfine selon une ou plusieurs des revendications 1 à 5, caractérisée en ce que le brillant superficiel de la pellicule est supérieur à 100.

7. Pellicule multicouche à base de polyoléfine selon une ou plusieurs des revendications 1 à 6, caractérisée en ce que l'opacité de la pellicule est inférieure à 22 %.

8. Pellicule multicouche à base de polyoléfine selon une ou plusieurs des revendications 1 à 7, caractérisée en ce que l'agent anti-adhérence de contact est le dioxyde de silicium et/ou le carbonate de calcium.

9. Pellicule multicouche à base de polyoléfine selon une ou plusieurs des revendications 1 à 8, caractérisée en ce que au moins une couche de soudage externe est traitée par effet couronne.

10. Pellicule multicouche à base de polyoléfine selon la revendication 9, caractérisée en ce que la couche de soudage externe, traitée par effet couronne, présente, immédiatement après la fabrication, une tension superficielle de plus de 36 mN/m.

11. Pellicule multicouche à base de polyoléfine selon une ou plusieurs des revendications 1 à 10, caractérisée en ce que l'épaisseur de la couche de soudage respective est supérieure à 0,4 µm.

12. Pellicule multicouche à base de polyoléfine selon une ou plusieurs des revendications 1 à 11, caractérisée en ce que la couche de base et/ou les couches de soudage contiennent des additifs.

13. Procédé pour la fabrication d'une pellicule multicouche à base de polyoléfine selon une ou plusieurs des revendications 1 à 12, dans lequel les masses fondues correspondant aux couches individuelles de la pellicule sont coextrudées à travers une filière plate, la pellicule ainsi obtenue est refroidie pour la solidification, la pellicule est orientée biaxialement dans le sens longitudinal et dans le sens transversal, la pellicule orientée biaxalement est thermofixée et éventuellement traitée par effet couronne sur la couche superficielle prévue pour le traitement par effet couronne, caractérisé en ce que l'étirage longitudinal est effectué à une température de moins de 120°C et à un rapport d'étirage supérieur à 5:1, et l'étirage transversal est effectué à une température de plus de 140°C et à un rapport d'étirage inférieur ou égal à 10:1.

14. Utilisation de la pellicule multicouche à base de polyoléfine selon une ou plusieurs des revendications 1 à 12, en tant que pellicule d'emballage.

15. Utilisation de la pellicule multicouche à base de polyoléfine selon une ou plusieurs des revendications 1 à 8 et/ou 11 et 12, en tant que pellicule d'emballage de cigarettes.